# EUROPEAN PATENT SPECIFICATION

(11) **EP 4 109 700 B1**
(45) Date of publication and mention of the grant of the patent: **21.10.2026**
(21) Application number: 21757078.7
(22) Date of filing: 20.01.2021
(51) Int. Cl.: H02J 3/00, G06Q 50/06

(54) **SYSTEM PLANNING ASSISTANCE SYSTEM AND SYSTEM PLANNING ASSISTANCE METHOD**
SYSTEMPLANUNGSHILFE-SYSTEM UND SYSTEMPLANUNGSHILFE-VERFAHREN
SYSTÈME D'AIDE À LA PLANIFICATION DE SYSTÈME ET PROCÉDÉ D'AIDE À LA PLANIFICATION DE SYSTÈME

(30) Priority: 21.02.2020 JP 2020028397
(43) Date of publication of application: 28.12.2022
(73) Proprietor: Hitachi, Ltd., Tokyo 100-8280 (JP)
(72) Inventor: SUENAGA, Shinya, Tokyo 100-8280 (JP); TADA, Yasuyuki, Tokyo 100-8280 (JP); MIYATA, Yasushi, Tokyo 100-8280 (JP); ICHIKAWA, Tsubasa, Tokyo 100-8280 (JP)
(74) Representative: MERH-IP Matias Erny Reichl Hoffmann Patentanwälte PartG mbB
(86) International application number: PCT/JP2021/001909
(87) International publication number: WO 2021/166534

(56) References cited:
- WO-A1-2019/119775
- WO-A1-2021/020012
- CN-A- 102 214 922
- CN-A- 105 186 541
- JP-A- 2016 130 928
- US-A1- 2017 063 089
- US-A1- 2019 148 977
- SUENAGA, SHINYA ET AL.: "Realization of online voltage profile optimization", IEEJ TRANSACTIONS ON POWER AND ENERGY, vol. 139, no. 4, 1 April 2019 (2019-04-01), pages 251 - 258, XP009530745, DOI: 10.1541/ieejpes.139.251

## Description

### Incorporation by Reference

The present application claims priority from Japanese Patent Application No. 2020-28397 filed on February 21, 2020.

### Technical Field

The present invention relates to electric power, and is suitably applied to, for example, an electric power system.

### Background Art

In the related art, there has been known facilities that perform production to consumption of electric power, such as a power generation facility, a power transmission facility, a substation facility, a power distribution facility, and a consumer facility. In order to maintain high-quality electric power supply in an electric power system, there is an electric power system monitoring control system. An operator of the electric power system uses the electric power system monitoring control system to measure a voltage, a frequency, the electric power, and the like at a specific measurement point in the electric power system, and operates a power system facility such that the voltage, the frequency, a power flow, and the like are predetermined appropriate values with respect to the electric power consumption of a varying consumer.

In a device that operates such a large number of electric-power-related facilities, in recent years, an attempt has been made to determine an operation with a higher degree of satisfaction by optimization calculation.

PTL 1 discloses a community management system that appropriately manages an operation of a community in which facility devices are operated by adjusting a plurality of parameters to which restrictions are imposed by optimization calculation in a system that operates electric-power-related facilities in a factory. When a high-quality solution (a solution satisfying the restrictions and having a high performance index) is not obtained at a time of the optimization calculation, the restrictions (delivery date and personnel) that can be flexibly changed to some extent is relaxed, and by considering conditions such as a cost at a time of the relaxation, the high-quality solution is obtained, and an operation by the more appropriate optimization calculation can be performed. Additionally, US 2017/063 089 A1 (see PTL 2) discloses a voltage and reactive power control system to economically operate a voltage reactive power control device by reducing a transmission loss and reducing the number of tapping operations affecting the life span of a facility. Further, US 2019/148 977 A1 (see PTL 3) discloses a voltage and reactive power monitoring/control device for maintaining balance between a voltage and a reactive power of the power system and improving economic efficiency even though output fluctuation of renewable energy or a change of a configuration or number of power sources, a configuration of a reactive power supply device, or a system configuration occurs due to the weather along with the elapse of time.

### Citation List

### Patent Literature

PTL 1: JP-2016-130928 A
PTL 2: US 2017/063 089 A1
PTL 3: US 2019/148 977 A1

### Summary of Invention

### Technical Problem

However, the technique disclosed in PTL 1 does not consider the relaxation of a restriction that cannot be flexibly changed in an operation system itself. For example, although a facility configuration cannot be changed (such as enhanced) in the operation system, the performance index may be improved for a long period of time by changing the facility configuration in a facility plan system. In the operation system, adaptation to a situation change is achieved by repeated optimization or the like, but the facility itself cannot be changed in the system, and the restriction corresponding to such a facility is not to be a relaxation target. Furthermore, even if the operation system and the facility plan system can perform the relaxation in cooperation with each other, since the change in the facility plan system is performed for a long period of time, it is difficult to accurately grasp a content of which facility is changed and the restriction is relaxed in the repetition of adaptation such as the optimization by the operation system to obtain a higher-quality solution.

The invention has been made in view of the above points, and provides a power system planning support system capable of supporting planning in a power system planning system and a power system planner by presenting a facility capable of a better operation in cooperation with a device that operates a power system by adapting to a situation change by optimization calculation or the like.

### Solution to Problem

The invention is set out in the appended set of claims. Preferable embodiments are defined in the dependent claims.

### Advantageous Effects of Invention

According to an aspect of the invention, in an operation system that repeatedly performs adaptation and improvement with respect to a situation change by optimization or the like, it is possible to find a point to be improved of a restriction of a facility or the like, and estimate and present an effect. Problems, configurations, and effects other than those described above are made clear by the following description of the embodiments.

### Brief Description of Drawings

[FIG. 1] FIG. 1 is a block diagram showing a configuration of a power system planning support system according to a first embodiment of the invention.
[FIG. 2] FIG. 2 is an explanatory diagram showing an example of electric power state data at a specific measurement point of an electric power system according to the first embodiment of the invention.
[FIG. 3] FIG. 3 is an explanatory diagram showing an example of device setting data of an electric device according to the first embodiment of the invention.
[FIG. 4] FIG. 4 is an explanatory diagram showing an example of device state data of the electric device according to the first embodiment of the invention.
[FIG. 5] FIG. 5 is an explanatory diagram showing an example of power system configuration data of a power transmission line in the electric power system according to the first embodiment of the invention.
[FIG. 6] FIG. 6 is an explanatory diagram showing an example of power system operation data for setting the electric power system into a predetermined state according to the first embodiment of the invention.
[FIG. 7] FIG. 7 is an explanatory diagram showing an example of facility change method data according to the first embodiment of the invention.
[FIG. 8A] FIG. 8A is an explanatory diagram showing an outline of estimation on a use frequency change of a target facility operated by a power system operation device according to the first embodiment of the invention and an influence on a performance index.
[FIG. 8B] FIG. 8B is an explanatory diagram showing an outline of estimation on the use frequency change of the target facility operated by the power system operation device according to the first embodiment of the invention and the influence on the performance index.
[FIG. 9] FIG. 9 is an explanatory diagram showing an example of performance change index data according to the first embodiment of the invention.
[FIG. 10] FIG. 10 is a flowchart of an example of processing in which a performance change index calculation unit according to the first embodiment of the invention generates performance change index data.
[FIG. 11] FIG. 11 is an explanatory diagram showing an example of a screen presented to a user by a performance change index presentation unit according to the first embodiment of the invention.
[FIG. 12] FIG. 12 is a block diagram showing a configuration of a power system planning support system according to a second embodiment of the invention.
[FIG. 13] FIG. 13 is an explanatory diagram showing an example of plan draft data according to the second embodiment of the invention.
[FIG. 14] FIG. 14 is an explanatory diagram showing an example of plan evaluation data according to the second embodiment of the invention.
[FIG. 15] FIG. 15 is a flowchart of an example of processing in which a plan evaluation unit according to the second embodiment of the invention generates an evaluation value of a performance index of one plan draft.

### Description of Embodiments

Hereinafter, an embodiment of the invention will be described in detail with reference to the drawings.

### [First Embodiment]

### <Configuration of Power System Planning System>

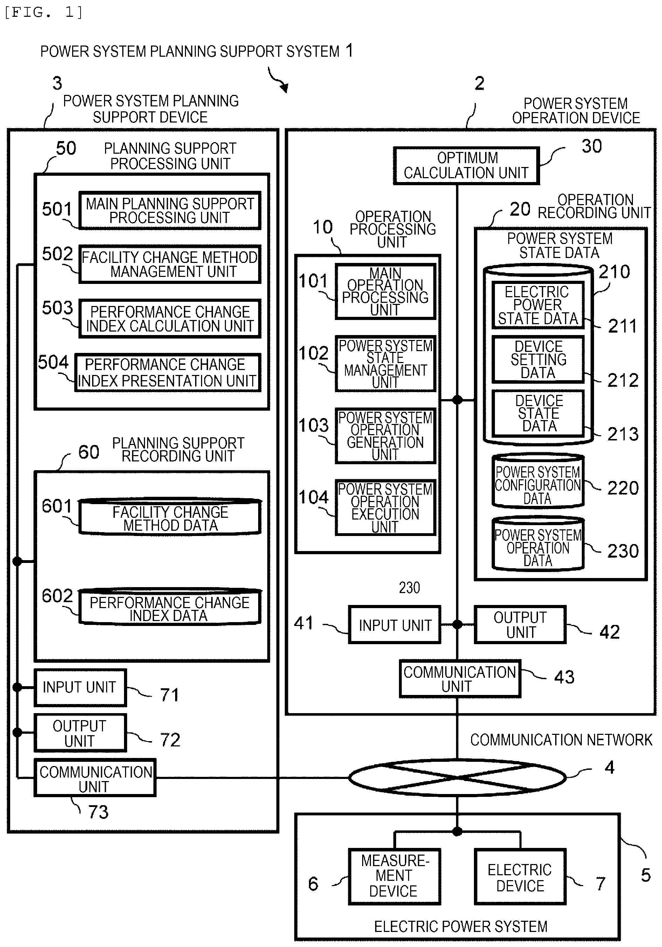

FIG. 1 is a block diagram showing a configuration of a power system planning support system 1 according to a first embodiment of the invention.

The power system planning support system 1 includes a power system operation device 2, a power system planning support device 3, and an electric power system 5, and the power system operation device 2, the power system planning support device 3, and the electric power system 5 are communicably connected via a communication network 4.

Each of the power system operation device 2 and the power system planning support device 3 is a circuit, a printed circuit board, a server, an information processing device, or the like including a controller such as a central processing unit (CPU) or a microprocessor, a storage device such as a memory, a hard disk, or a solid-state drive (SSD), and a communication device.

The power system operation device 2 includes an operation processing unit 10 that performs various types of processing, an operation recording unit 20 that records (stores) various types of information, an optimum calculation unit 30 that calculates an optimum solution under a predetermined condition, a communication unit 43 that performs communication with various devices via the communication network 4, an input unit 41 that inputs various types of information, and an output unit 42 that outputs various types of information.

The power system planning support device 3 includes a planning support processing unit 50 that performs various types of processing, a planning support recording unit 60 that records (stores) various types of information, a communication unit 73 that performs communication with various devices via the communication network 4, an input unit 71 that inputs various types of information, and an output unit 72 that outputs various types of information.

The operation processing unit 10, the optimum calculation unit 30, and the planning support processing unit 50 may be implemented by software that performs processing by the controller in accordance with various programs stored in the storage device, or may be implemented by hardware such as a circuit. Further, functions of the operation processing unit 10, the optimum calculation unit 30, and the planning support processing unit 50 are not limited to being implemented by a single device, and may be implemented by a plurality of devices connected so as to be able to communicate with each other. The operation recording unit 20 and the planning support recording unit 60 are implemented by a storage device. The communication units 43 and 73 are implemented by a communication device. The input units 41 and 71 are a keyboard, a pointing device such as a mouse, a touch panel, an audio instruction device, and the like, and are implemented by including at least one of the keyboard, the pointing device, the audio instruction device, and the like. The output units 42 and 72 are a display device, a printer, an audio output device, and the like, and are implemented by including at least one of the display device, the printer, the audio output device, and the like.

The power system operation device 2 and the power system planning support device 3 may be implemented as an integrated device, and the input units 41 and 71, the output units 42 and 72, and the communication units 43 and 73 may be configured to be common.

The power system operation device 2 can acquire measurement data of the electric power system 5 from a measurement device 6 of the electric power system 5 via the communication network 4 connected to the communication unit 43. The power system operation device 2 can change a setting of an electric device 7 by transmitting an operation command to the electric device 7 of the electric power system 5. FIG. 1 shows one measurement device 6 and one electric device 7 as an example, and the power system planning support system 1 may include one or a plurality of measurement devices 6 and a plurality of electric devices 7.

The electric power system 5 includes a power generation facility (for example, a power plant, which is not shown) that generates electric power using a power generation device, a consumer facility (not shown) that consumes the electric power generated by the power generation facility, a power distribution facility (a power transmission facility, a substation facility, a power distribution facility, and the like, all of which are not shown) that transmits the electric power from the power generation facility to the consumer facility, and the like. The electric power system 5 further includes the measurement device 6 that measures states of these facilities.

The power generation device is a device that performs thermal power generation, hydraulic power generation, nuclear power generation, geothermal power generation, solar power generation, wind power generation, or the like, and may be a device that generates the electric power by various other power generation methods. The power distribution facility includes an overhead power transmission line, an underground power transmission line, a transformer, a circuit breaker, and a shut compensator, and includes various other devices related to power transmission and distribution.

The measurement device 6 measures a state at a specific measurement point of the electric power system 5. Examples of measurement items may include electric power items such as a voltage, a phase, and the electric power of the electric power system 5, weather items such as a temperature, a wind speed, a wind direction, a precipitation amount, and a solar radiation amount, an item of a setting state and an operation state of the electric device 7, and an item of an operation state of a device that changes an electric power flow state of the power distribution facility, the power generation device, or the like. In addition, various items may be the measurement items.

The measurement point includes a bus of the power generation facility, a bus of the substation facility, the power distribution facility, the consumer facility, and the like. The number of measurement devices for one measurement point may be singular or plural. A value measured by the measurement device 6 is transmitted to the power system operation device 2 via the communication network 4. The measurement device 6 may add and transmit information on a measurement date and time together with the measured value.

The measurement device 6 indicates the plurality of measurement devices that measure the state at the specific measurement point of the electric power system 5. Examples of the measurement items may include the power items such as the voltage, the phase, and the electric power of the electric power system 5, the weather items such as the temperature, the wind speed, the wind direction, the precipitation amount, and the solar radiation amount, the item of the setting state and the operation state of the electric device 7, and the item of the operation state of the device that changes the electric power flow state of the power distribution facility, the power generation device, or the like, and various other items may be the measurement items. The measurement point includes the bus of the power generation facility, the bus of the substation facility, the power distribution facility, the consumer facility, and the like, and the measurement device for one measurement point may be singular or plural. The value measured by the measurement device 6 is transmitted to the power system operation device 2 via the communication network 4. At this time, the measurement device 6 may add and transmit the information on the measurement date and time together with the measured value.

The electric device 7 is a device that changes the electric power flow state of the electric power system 5, such as the power generation device, the transformer, the circuit breaker, and the shut compensator, among the devices constituting the electric power system 5, and may include various other devices. When the electric device 7 receives the operation command transmitted from the power system operation device 2 via the communication network 4, the electric device 7 can change a setting state according to a command content.

The power system operation device 2 optimizes an operation of the electric power system 5 in a short term (for example, in units of seconds or in units of minutes) by determining an operation value of each electric device 7 within a settable range so as to improve a predetermined index represented by a power transmission loss of the electric power system 5. In contrast, the power system planning support device 3 supports a change in the electric device 7 for improving the operation of the electric power system 5 for a long period of time (for example, in units of months or years). Here, the change in the electric device 7 is, for example, addition or reduction of the settable range of the operation value of the electric device 7, a removal of the electric device 7, or the like.

### <Power System Operation Device>

The power system operation device 2 operates while continuously improving the predetermined index represented by the power transmission loss of the electric power system 5 according to a content to be described below.

The operation processing unit 10 of the power system operation device 2 includes a main operation processing unit 101, a power system state management unit 102, a power system operation generation unit 103, and a power system operation execution unit 104. The power system state management unit 102 acquires, via the communication unit 43, various types of data transmitted by the measurement device 6 periodically (for example, at intervals of 2 seconds) or at a time of an instruction from the main operation processing unit 101 (for example, at a time point desired by a user), and records the various types of data together with a measurement date and time in power system state data 210 of the operation recording unit 20.

As shown in FIG. 1, the power system state data 210 includes electric power state data 211, device setting data 212, and device state data 213. The electric power state data 211 indicates data related to the electric power flow state such as a supply and demand amount, a power transmission amount, a voltage, a current, and a phase of the electric power, and includes, for example, information on such as active power, reactive power, and a voltage flowing through a load (a device that consumes electricity in the electric power system 5), and active power, reactive power, and a voltage generated by the power generation device.

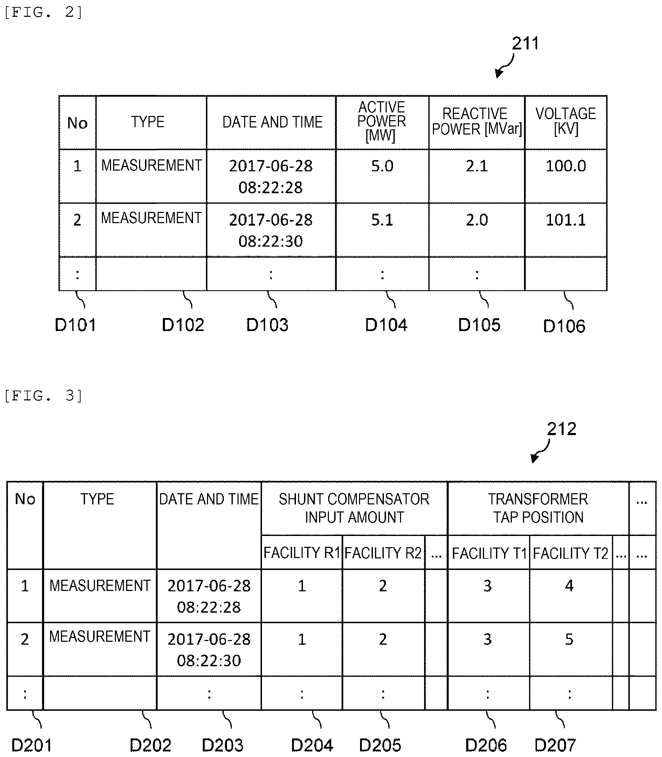

FIG. 2 is an explanatory diagram showing an example of the electric power state data 211 at the specific measurement point of the electric power system 5 according to the first embodiment of the invention.

As shown in FIG. 2, the electric power state data 211 includes, for example, information on a serial number D101, a type D102, a date and time D103, active power D104, reactive power D105, and a voltage D106. In the electric power state data 211, a value (a measured value or a predicted value) at the specific measurement point is stored in time series. For example, when the measured value is stored, the type D102 is set as "measurement", and values of the date and time D103, the active power D104, the reactive power D105, and the voltage D106 are appropriately changed according to the measurement at the measurement point.

The power system state management unit 102 may include a future date and time in the date and time D103, acquire a value (predicted value or estimated value) at the specific measurement point from a storage device or the like of an external server (not shown) separately, and store the value with "prediction" in the type D102. The electric power state data 211 stores a state value represented by the actual measured value or the predicted value. A predicted value or an estimated value may be similarly stored in the device setting data 212, the device state data 213, and the power system configuration data 220 to be described later.

Next, the device setting data 212 will be described. The device setting data 212 includes information on the setting state of the electric device 7.

FIG. 3 is an explanatory diagram showing an example of the device setting data 212 of the electric device 7 according to the first embodiment of the invention.

As shown in FIG. 3, the device setting data 212 includes, for example, information on a serial number D201, a type D202, a date and time D203, an input amount D204 of a shut compensator R1, an input amount D205 of a shut compensator R2, a tap position D206 of a transformer T1, and a tap position D207 of a transformer T2. In the device setting data 212, information (setting value) indicating a setting of the electric device 7 can be stored in time series. The setting value is also referred to as an operation value, and includes, for example, a shut compensator input amount (reactive power adjustment amount), a tap position of a transformer (transformation ratio), and a generator output voltage.

The input amount D204 of the shut compensator R1, the input amount D205 of the shut compensator R2, the tap position D206 of the transformer T1, and the tap position D207 of the transformer T2 are examples of items (setting values) related to the setting of the electric device 7, and a combination of items acquired from the measurement device 6 or an external server can be appropriately adopted as the information stored in the device setting data 212.

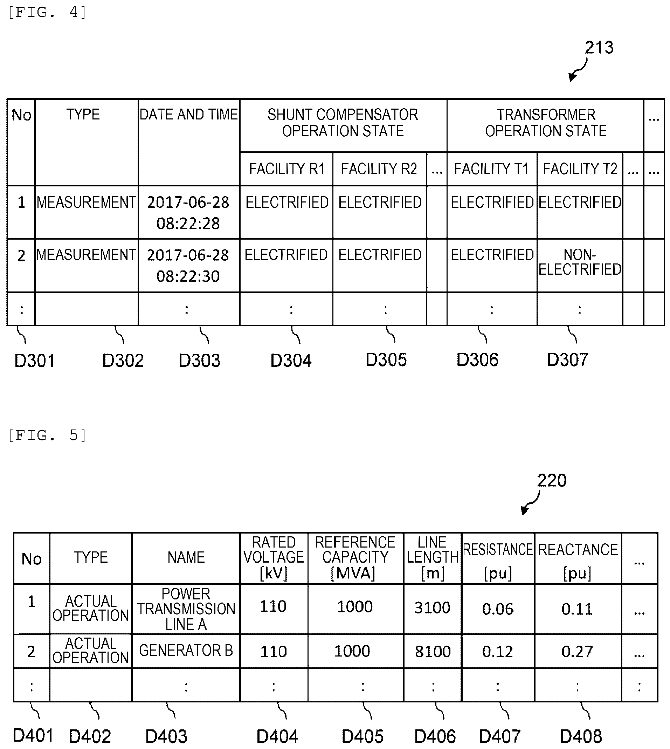

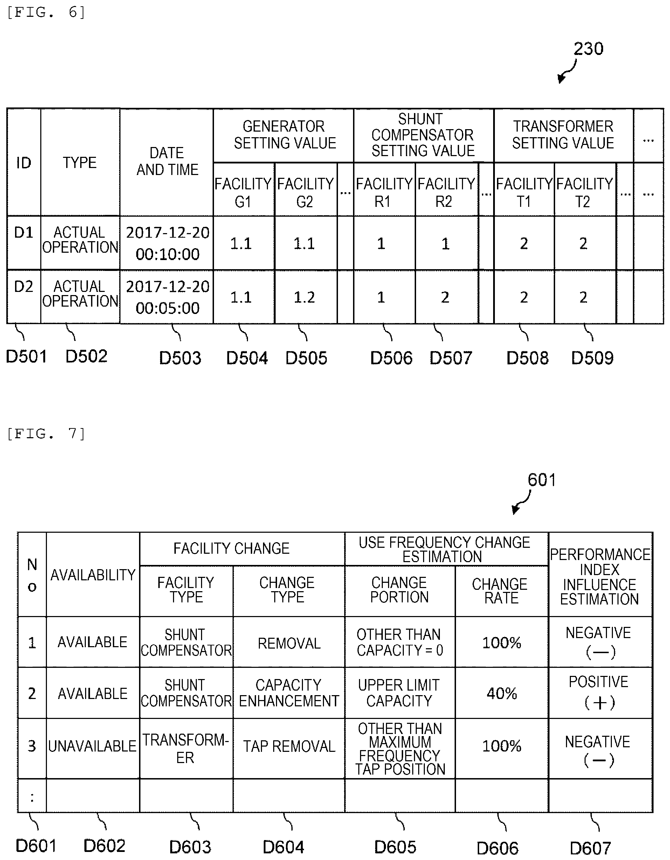

FIG. 3 shows, for example, the input amounts of the shut compensators R1 and R2 and the tap positions of the transformers T1 and T2, and omits the others, and in practice, the device setting data 212 also includes values related to other devices constituting the electric power system 5. The same applies to data shown in FIGS. 4, 6, and the like.

Next, the device state data 213 will be described. The device state data 213 includes information (operation state information) indicating the operation state of the electric device 7 that changes the electric power flow state of the power distribution facility, the power generation device, or the like.

FIG. 4 is an explanatory diagram showing an example of the device state data 213 of the electric device 7 according to the first embodiment of the invention.

As shown in FIG. 4, the device state data 213 includes, for example, information on a serial number D301, a type D302, a date and time D303, an operation state D304 of the shut compensator R1, an operation state D305 of the shut compensator R2, an operation state D306 of the transformer T1, and an operation state D307 of the transformer T2.

The device state data 213 stores the operation state information of the electric device 7 in time series. The operation state D304 of the shut compensator R1, the operation state D305 of the shut compensator R2, the operation state D306 of the transformer T1, and the operation state D307 of the transformer T2 may include items such as an open and close state of a switching device such as a circuit breaker or a switch, and a power transmission status of a power transmission line. In the example of FIG. 4, as the operation state, it is shown whether the devices are electrified. Items of the device state data 213 may be a combination of the item of the operation state of the electric device 7 that changes the electric power flow state of the power distribution facility, the power generation device, or the like, an item of an operation state of another device acquired from the measurement device 6, or items acquired from the external server.

Next, power system configuration data 220 will be described. The power system configuration data 220 includes information related to a configuration of the electric power system 5.

FIG. 5 is an explanatory diagram showing an example of the power system configuration data 220 of the power transmission line in the electric power system 5 according to the first embodiment of the invention.

The power system configuration data 220 includes, for each power transmission line, for example, information on a serial number D401, a type D402, a name D403, a rated voltage D404, a reference capacity D405, a line length D406, a resistance D407, and a reactance D408.

The power system configuration data 220 may be stored in advance in the operation recording unit 20 as the information related to the configuration of the electric power system 5 according to the embodiment, or may adopt a planned value for the electric power system 5 provided from the power system planning support device via the communication unit 43. An "actual operation" in the type D402 in the example of FIG. 5 indicates that these pieces of information relate to the configuration of the electric power system 5 that is actually operating. Meanwhile, when the planned value is adopted, the type D402 can be distinguished from the "actual operation" by setting the type D402 as a "plan A" or the like.

The power system configuration data 220 includes, for example, information on items (parameter items) of the devices constituting the electric power system 5 and items that do not change in a short time, such as mutual electrical connection forms of the devices, among information necessary for analysis of the electric power system 5. FIG. 5 shows information on items corresponding to the power transmission line as an example of the power transmission line, and the power system configuration data 220 regarding other devices may include items corresponding to the devices, which are different from the above.

FIG. 6 is an explanatory diagram showing an example of power system operation data 230 for setting the electric power system 5 according to the first embodiment of the invention into a predetermined state.

The power system operation data 230 stores, for example, an identifiable ID D501, a type D502, a date and time D503, and setting values D504 to D509 of facilities to be operated. Items of the setting values may be the same as those of the device setting data 212. The setting values D504 to D509 are setting values of a control target provided in the electric device 7, and may be a combination of other devices such as a circuit breaker and a switch. The date and time D503 is referred to as a date and time when power system operation data is applied.

Next, processing of the power system operation device 2 will be described. The main operation processing unit 101 instructs the power system operation generation unit 103 to sequentially generate, at a specific interval at consecutive dates and times, the power system operation data 230 for operating the electric power system to a state in which the predetermined index is improved.

The power system operation generation unit 103 provides the optimum calculation unit 30 with a record of the power system state data 210 immediately before the instructed date and time and the power system configuration data 220, acquires a setting value of control for achieving a calculated optimum electric power system state from the optimum calculation unit 30, and stores the setting value as the power system operation data 230 in which the type D502 is "actual operation".

The power system operation execution unit 104 generates an operation command for implementing these setting values of the power system operation data 230 in which the stored type D502 is the actual operation, and transmits the operation command to each of the target electric devices 7 of the electric power system 5. The specific interval may be a date and time specified at a fixed interval (for example, an interval of 10 minutes) or an indefinite interval by a setting in advance, or a date and time at a time point appropriately specified by an instruction via the input unit 41 or the communication unit 43.

In the above-described processing, the calculation by the optimum calculation unit 30 will be described. The optimum calculation unit 30 calculates a state of the electric power system 5 optimal for a predetermined purpose such as a reduction in power loss and an improvement in voltage stability. The optimum calculation unit 30 determines a variable of the electric power system 5 such that an index representing the purpose is improved. For example, the optimum calculation unit 30 gives an objective function representing the reduction in power loss, and calculates a combination of variables that minimizes or maximizes the objective function from among combinations of variables that satisfy a constrain condition of a power flow equation of the electric power system 5, and other equality constrain conditions and inequality constrain conditions such as a voltage range and device controllability. Examples of the variables include a voltage of each bus, the input amount of the shut compensator, the tap position of the transformer, and the like.

The optimum calculation unit 30 can perform the calculation using a known technique. The method used by the optimum calculation unit 30 is not limited to the method described in the above document, and other known methods may be used without depending on the optimization calculation as long as the method is a method of calculating the optimal or improved state of the electric power system 5 for the desired purpose.

Through the above processing, the power system operation device 2 operates while continuously improving the predetermined index represented by the power transmission loss of the electric power system 5.

### <Power System Planning Support Device>

As will be described later, the power system planning support device 3 supports improvement of the facilities of the electric power system operated by the power system operation device.

The planning support processing unit 50 of the power system planning support device 3 includes a main planning support processing unit 501, a facility change method management unit 502, a performance change index calculation unit 503, and a performance change index presentation unit 504.

Facility change method data 601 includes a facility change method that may be taken at a time of planning and an expected change estimation information due to the change.

FIG. 7 is an explanatory diagram showing an example of the facility change method data 601 according to the first embodiment of the invention.

As shown in FIG. 7, the facility change method data 601 includes information on a serial number D601, availability D602, a facility type D603 and a change type D604 for a facility change to be used, a change portion D605 and a change rate D606 for use histogram change estimation of the facility when the facility change is performed, and influence estimation D607 on a performance index when the facility change is performed. A more detailed classification such as a voltage class may be added as the facility type of the facility change, and details such as a capacity value and a ratio added by capacity enhancement may be added as the change type.

The facility type D603 of the facility change method data 601 may be a facility such as a shut compensator and a transformer serving as an operation target in the power system operation device. Further, the change type D604 is a change content of a target facility assumed in a middle or long-term facility plan, and may be removal or capacity enhancement of the shut compensator, tap removal or upper and lower limit voltage shift of the transformer, or the like. The facility change method data 601 may be stored in advance in the planning support recording unit 60, and the facility change method data 601 input by the user via the input unit 71 and the output unit 72 may be registered by the facility change method management unit 502.

D605, D606, and D607 of the facility change method data 601 are estimation on the use frequency change of the target facility operated by the power system operation device 2 and the influence on the performance index when the facility change specified by D603 and D604 is performed.

The facility change method data 601 is not limited to the example shown in FIG. 7, and may include use frequency change estimation and performance index influence estimation related to various changes of various electric devices. The various changes of the various electric devices may be, for example, addition or reduction of a settable output voltage of the generator, addition or reduction of a settable shut compensator input amount, addition or reduction of a settable tap position of the transformer, or removal or function change of each electric device.

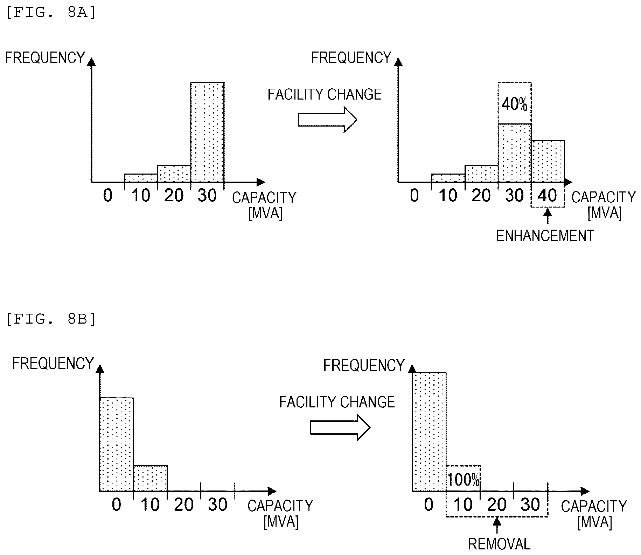

FIGS. 8A and 8B are explanatory diagrams showing an outline of the estimation on the use frequency change of the target facility operated by the power system operation device 2 according to the first embodiment of the invention and the influence on the performance index.

In the power system operation device 2, since the target facility is repeatedly operated, a frequency distribution of a set use portion of the target facility can be obtained. FIGS. 8A and 8B are examples of a capacitive shut compensator, and use frequency distributions in a power system configuration to be operated by the power system operation device 2 are described on a left side. The use frequency distributions are distributions before the facility change. In contrast, the use frequency distributions when the assumed facility change is performed are described on a right side.

FIG. 8A shows an example of the use frequency distribution before and after the facility change when the use frequency of a capacity equal to or close to an upper limit is high before the facility change is performed. When the capacity equal to the upper limit is set, there are a case in which the capacity equal to the upper limit is set because the capacity is actually optimal, and a case in which the capacity equal to the upper limit is set because a larger capacity is actually optimal but cannot be set. That is, when the capacity can be set to a larger capacity at a certain rate in a use at the capacity upper limit, the performance index in the power system operation device 2 may be improved to a larger extent. Therefore, for example, when 40% of the use of the capacity upper limit can be estimated, based on a past performance or the like, to be in a situation in which improvement as described above is possible by the enhancement, it can be assumed that 40% of the use frequency at the upper limit capacity has a positive influence on the performance index with respect to the facility change such as the capacity enhancement of the facility.

FIG. 8B shows an example of the use frequency distribution before and after the facility change when the use frequency of a capacity equal to or close to 0 is high before the facility change is performed. In this case, the use at the capacity other than 0 is small, contribution to the performance improvement in the power system operation device 2 may be small, and it can be assumed that 100% of the use frequency at the capacity other than 0 has a positive influence on the performance index. Therefore, it can be assumed that there is a negative influence on the facility change such as the removal of the facility.

The facility change method management unit 502 presents the stored facility change method data 601 to the user via the output unit 72, and can perform change or addition from the user via the input unit 71.

The performance change index calculation unit 503 acquires the facility change method data 601, further acquires the power system state data 210, the power system configuration data 220, and the power system operation data 230 from the power system operation device 2 via the communication network 4, and generates performance change index data 602. As the performance index, for example, a period average value of the power transmission losses is assumed, and other indexes may be adopted.

The performance change index data 602 includes, as information useful for the power system planning, an estimated value of a change in the performance index of the power system operation device 2 with respect to the facility change registered in the facility change method data 601.

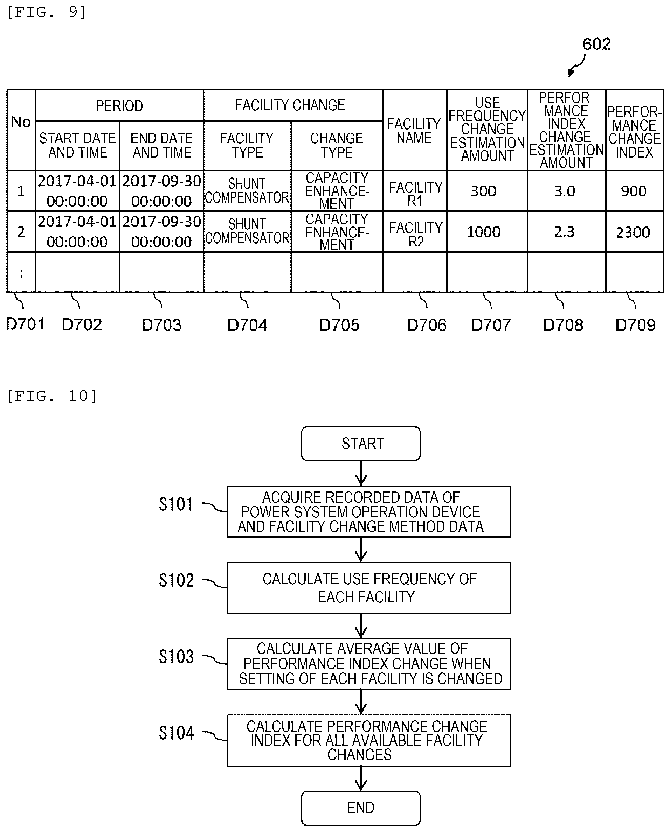

FIG. 9 is an explanatory diagram showing an example of the performance change index data 602 according to the first embodiment of the invention.

As shown in FIG. 9, the performance change index data 602 includes information on a serial number D701, a start date and time D702 and an end date and time D703 of a calculation period of a performance change index, a facility type D704 and a change type D705 of the facility change, a facility name D706, a use frequency change estimation amount D707, a performance index change estimation amount D708, and a performance change index D709.

The use frequency change estimation amount D707 is a use frequency (degree) affected by changing the facility. The larger this value is, the larger the change in the performance due to the change in the facility is. The performance index change estimation amount D708 is a strength of the facility contributing to the improvement of the performance index by the operation system. The larger this value is, the greater the influence that the operation of the facility has on the performance improvement of the entire power system. This is, for example, an average of improvement values of the performance index such as the power transmission loss when the power system operation of each facility is changed is used, and when the optimization calculation is used, an average value of gradients of determination variables around a solution of the objective function may be used. Alternatively, a preset fixed value may be set in order to reduce a difference in the influence on the performance improvement or to simplify the calculation. The performance change index D709 is an index indicating a magnitude of the change in the performance of the entire power system due to the change in the facility. In the example of FIG. 9, the performance change index D709 is a value obtained by multiplying a value of the use frequency change estimation amount D707 by a value of the performance index change estimation amount D708.

FIG. 10 is a flowchart of an example of processing in which the performance change index calculation unit 503 generates the performance change index data 602 according to the first embodiment of the invention.

When the main planning support processing unit 501 instructs the performance change index calculation unit 503 to generate the performance change index data 602 in response to an instruction from the user via the input unit 71 or the communication unit 73 or a condition such as a date and time registered in advance, the performance change index calculation unit 503 acquires the power system state data 210, the power system configuration data 220, and the power system operation data 230 from the power system operation device 2 via the communication network 4, and further acquires the facility change method data 601 (S101).

Next, the performance change index calculation unit 503 generates, based on the acquired facility change method data 601 and power system operation data 230, a degree distribution table of a setting value (X) as a characteristic value and the number of times of use (M) as the degree as the use frequency (histogram) of each facility within a calculation period (S102).

Next, a time point at which there is a change in the setting of the facility in the power system operation data 230 is searched for, and an arithmetic average (ΔKavg) of change values (ΔK) of the performance index before and after the change is obtained as the performance index change estimation amount D708 (S103).

Finally, for all available facility changes of all the target facilities, the use frequency change estimation amount D707 (ΔF) and the performance change index D709 (ΔP) of the performance change index data 602 are obtained from the following calculation formulas (1) and (2) using the facility change method data 601, and are stored in the performance change index data 602 (S104). 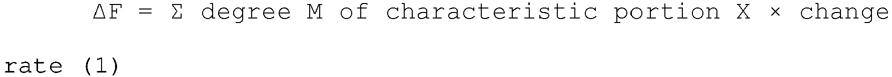 ΔF = Σ degree M of characteristic portion X × change rate (1) 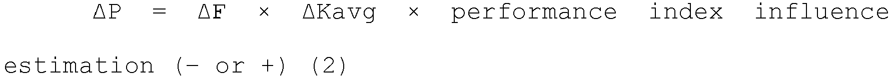 ΔP = ΔF × ΔKavg × performance index influence estimation (- or +) (2)

The performance change index presentation unit 504 can acquire data of all facilities having the same facility change and period from the performance change index data 602 according to the instruction from the user via the input unit 71 or the communication unit 73, and can sort and display the data by any value of the use frequency change estimation amount D707, the performance index change estimation amount D708, and the performance change index D709. Further, the use frequency (histogram) of each facility may be displayed together.

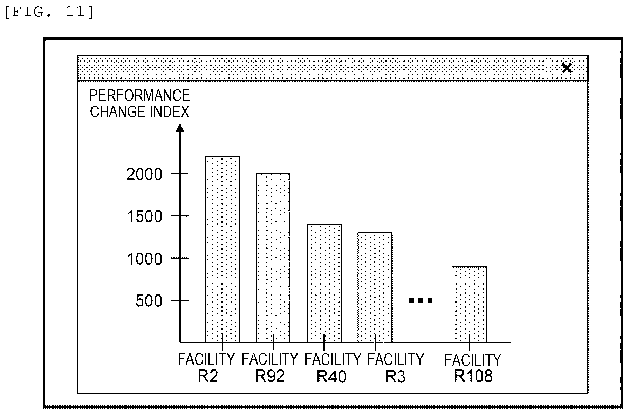

FIG. 11 is an explanatory diagram showing an example of a screen presented to the user by the performance change index presentation unit 504 according to the first embodiment of the invention.

FIG. 11 shows, for example, a graph of values of the performance change index D709 at a time of change for each facility. For example, in a case of the facility change in which the positive influence (that is, improvement) is expected on the performance index, such as the capacity enhancement of the shut compensator, sorting is performed according to a magnitude of the values of the performance change index D709, such that it is possible to easily specify a facility in which the facility change has a large influence on the improvement of the performance index in the power system operation device 2. On the other hand, in a case of the facility change in which the negative influence (that is, deterioration) is expected on the performance index, such as the removal of the facility, similarly, the sorting is performed according to the magnitude of the values of the performance change index D709, such that it is possible to easily specify a facility in which the facility change has a small influence on the performance of the entire power system even if the removal is performed.

As described above, in the present embodiment, by presenting information useful for specifying an enhanced portion of a facility capable of restriction relaxation that can achieve a high performance index and a portion to be removed of a facility that can be slimmed while avoiding the deterioration of the performance index to a power system operation device that repeatedly adapts to and improves a situation change by optimization or the like, it is possible to facilitate the facility change suitable for the operation and discovery of the target facility and support planning of the facility change.

### [Second Embodiment]

Next, a second embodiment of the invention will be described. Except for differences to be described below, since each unit of a system of a second embodiment has the same functions as those of each unit denoted by the same reference numerals of the first embodiment shown in FIGS. 1 to 11, descriptions thereof will be omitted.

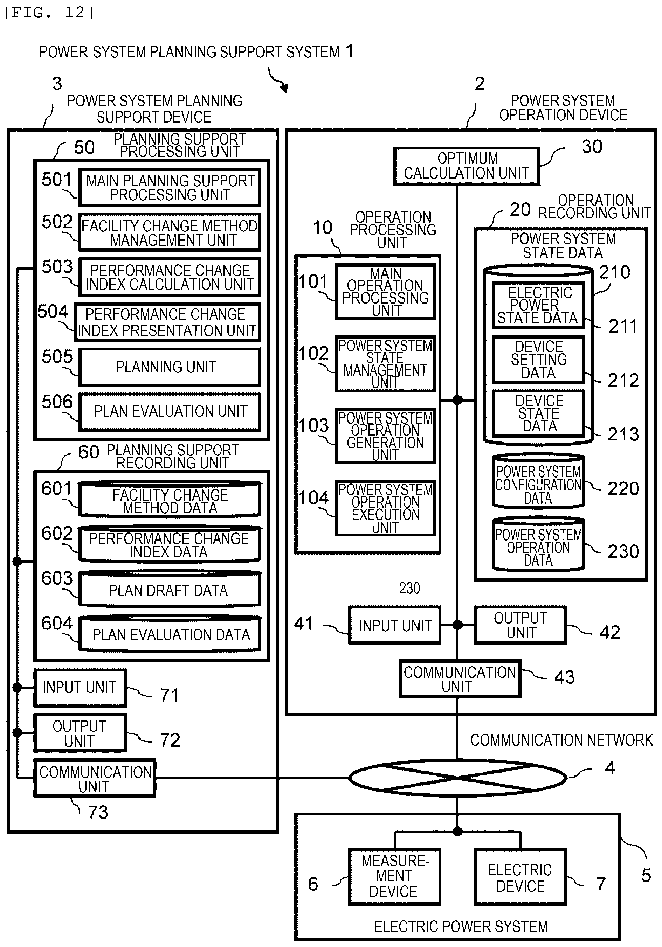

FIG. 12 is a block diagram showing a configuration of the power system planning support system 1 according to the second embodiment of the invention.

In the second embodiment, the power system planning support device 3 includes a planning unit 505 and a plan evaluation unit 506 in the planning support processing unit 50, and plan draft data 603 and plan evaluation data 604 in the planning support recording unit 60, in addition to functions of the device according to the first embodiment. In the present embodiment, it is possible to prepare a facility plan suitable for an operation in a power system plan and evaluate a change in a performance index at a time of the operation when a change according to the plan is applied.

Here, portions of the second embodiment different from those of the first embodiment will be mainly described.

The plan draft data 603 includes information indicating a list of facilities to which a facility change that is available in the facility change method data 601 is applied, and a condition when the facility to which the change is applied is automatically specified.

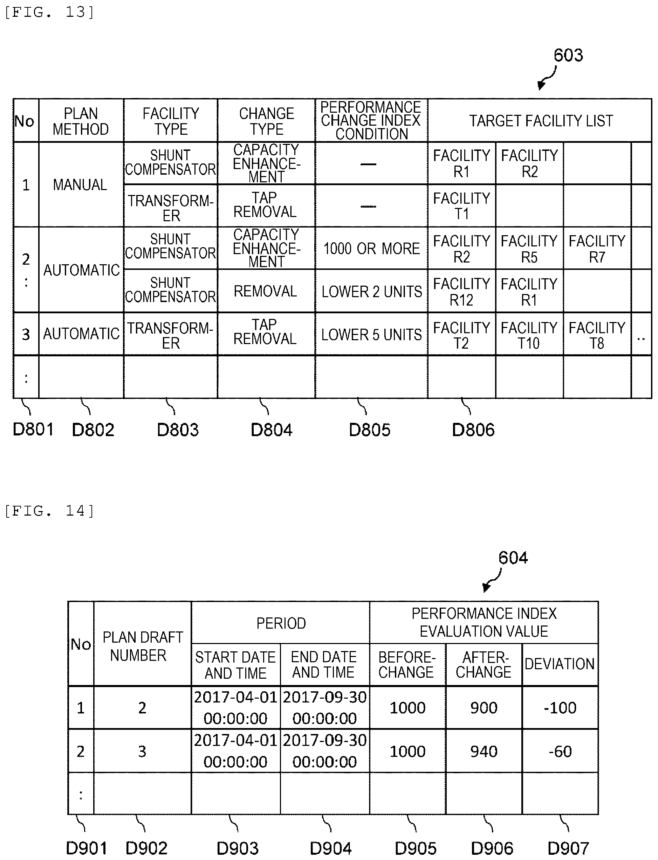

FIG. 13 is an explanatory diagram showing an example of the plan draft data 603 according to the second embodiment of the invention.

As shown in FIG. 13, the plan draft data 603 stores, for example, a serial number D801 of a plan draft, a plan method D802, a facility type D803, a change type D804, a performance change index condition D805 when a change facility is automatically specified, and a target facility list D806. Other than the target facility list D806, the information may be stored in advance by a user via the input unit 71 or the communication unit 73.

The target facility list D806 when the plan method D802 is "manual" is stored in advance by the user via the input unit 71 or the communication unit 73. On the other hand, in the target facility list D806 when the plan method D802 is "automatic", the planning unit 505 automatically stores a facility that is the type indicated by values of the facility type D803 and the change type D804 and satisfies a condition indicated by a value of the performance change index condition D805.

The plan evaluation data 604 includes an evaluation value of the performance index in the power system operation device 2 when the facility change is applied to each plan stored in the plan draft data 603.

FIG. 14 is an explanatory diagram showing an example of the plan evaluation data 604 according to the second embodiment of the invention.

As shown in FIG. 14, the plan evaluation data 604 stores, for example, a serial number D901 of an evaluation result, a number D902 of a plan draft to be evaluated, a start date and time D903 and an end date and time D904 of an evaluation period, a before-change D905 and an after-change D906, and a deviation D907 of the evaluation value of the performance index as the evaluation result. The before-change D905 and the after-change D906 are evaluation values of the performance index before and after the facility change, respectively, and the deviation D907 is a difference between the evaluation values.

The planning unit 505 acquires the plan draft data 603, searches the performance change index data 602 for a facility that satisfies the conditions of the facility type, the change type, and the performance change index with respect to the plan draft whose plan method is automatic among the plan drafts described in the plan draft data and extracts the facility from performance change index data 602, and stores the facility in the target facility list. Further, when an instruction from the user is acquired via the input unit 71 or the communication unit 73, the plan draft data 603 is presented by the output unit 72 such that confirmation or correction can be performed. The plan draft data 603 can be changed in accordance with the instruction acquired from the user via the input unit 71 or the communication unit 73.

The plan evaluation unit 506 sequentially takes up and evaluates the plan drafts described in the plan draft data 603, and stores the plan drafts in the plan evaluation data 604.

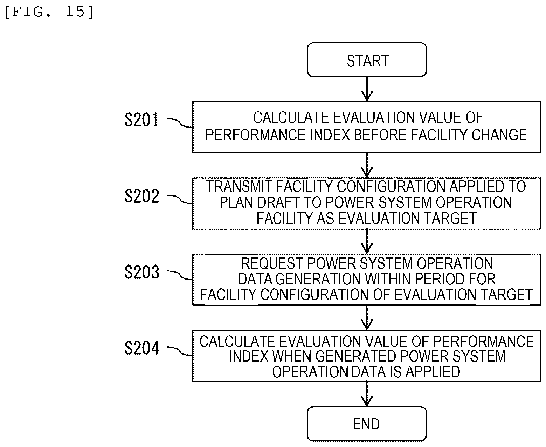

FIG. 15 is a flowchart of an example of processing in which the plan evaluation unit 506 according to the second embodiment of the invention generates the evaluation value of the performance index of one plan draft.

The plan evaluation unit 506 acquires the power system state data 210, the power system configuration data 220, and the power system operation data 230 from the power system operation device 2 via the communication network 4, generates the evaluation value of the performance index before the facility change, and stores the evaluation value of the performance index before the facility change as a value of the before-change D905 of the performance index evaluation value (S201). As the performance index, for example, a period average value of power transmission losses is assumed, and other indexes may be adopted.

Next, the plan evaluation unit 506 updates the power system configuration data 220 by all the facility changes described in the plan draft data 603, and transmits the power system configuration data 220 to the power system operation device 2 via the communication network 4. At this time, the plan evaluation unit 506 may also transmit a label clearly indicating a plan evaluation target, and may distinguish the power system configuration data 220, for example, by describing the label in the type D402 of the power system configuration data 220 (S202).

Next, the plan evaluation unit 506 specifies, as an evaluation period, a period of the performance change index data 602 when the plan draft is generated, and requests the power system operation device 2 to generate the power system operation data 230 within the period. The generated power system operation data 230 may be distinguished by describing the label transmitted in S202 in the type D502 (S203).

Finally, the plan evaluation unit 506 acquires the generated power system operation data 230, generates the evaluation value of the performance index after the facility change by using the power system state data 210 and the plan-draft-applied power system configuration data 220, and stores the evaluation value as a value of after-change D906. A difference thereof is also stored as a value of the deviation D907 (S204).

Further, when the plan evaluation unit 506 acquires the instruction from the user via the input unit 71 or the communication unit 73, the plan evaluation unit 506 can present the plan evaluation data 604 by the output unit 72 such that the plan evaluation data 604 can be confirmed.

As described above, in the present embodiment, in addition to effects of the first embodiment, it is possible to automatically generate the plan draft with a high possibility of improving the performance index with respect to the plan draft including a combination of various facility changes. Furthermore, with respect to the created plan draft, the change in the performance index when the plan is operated by the power system operation device 2 can be evaluated in advance, a degree of the improvement by the plan draft can be confirmed and a plurality of plan drafts can be compared, and the facility plan having a high performance index improvement effect can be more efficiently planned.

The embodiments of the invention described above may include the following examples.

(1) A power system planning support system (for example, a power system planning support device 3 or a power system planning support system 1 including a power system planning support device 3) includes a processor (for example, planning support processing unit) and a storage device (for example, planning support recording unit), the storage device stores first information (for example, device setting data 212 or power system operation data 230 acquired from power system operation device 2) indicating a performance of usage statuses of a plurality of electric devices that change an electric power flow of an electric power system in a predetermined period, second information (for example, performance index calculated based on power system state data 210, power system configuration data 220, power system operation data 230 which are acquired from the power system operation device 2) indicating a performance index of the electric power system in the predetermined period, and third information (for example, facility change method data 601) indicating a change in the usage status of each of the electric devices estimated when each of the electric devices is changed, and the processor estimates, based on the first information and the third information, a usage status of each of the electric devices after being changed (for example, use frequency change estimation amount D707 of FIG. 9), estimates, based on the estimated usage status of each of the electric devices and a contribution degree (for example, performance index change estimation amount D708 of FIG. 9) to a change in the performance index of the electric power system when each of the electric devices is changed, the change (for example, performance change index D709 of FIG. 9) in the performance index of the electric power system when each of the electric devices is changed, and outputs the estimated change in the performance index.

Accordingly, it is possible to find a point to be improved of a restriction of a facility or the like in the electric power system, and estimate and present an effect.

(2) In (1) described above, the first information includes information indicating a performance of an operation value of each of the electric devices as information indicating the performance of the usage statuses of the plurality of electric devices, the third information includes information (for example, use frequency change estimation of facility change method data 601) indicating a change in a use frequency of the operation value of each of the electric devices as information indicating the change in the usage status due to the change in each of the electric devices, and the processor calculates, based on the first information, the use frequencies of the operation values of the plurality of electric devices in the predetermined period, estimates (for example, estimation shown in FIGS. 8A and 8B), based on the calculated use frequency and the third information, a use frequency of the operation value of each of the electric devices after being changed, and estimates, based on the estimated use frequency and the contribution degree, the change in the performance index of the electric power system when each of the electric devices is changed.

Accordingly, it is possible to find the point to be improved of the restriction of the facility or the like based on the performance of the use frequency of the operation value of the facility or the like in the electric power system, and estimate and present the effect.

(3) In (2) described above, the processor estimates, based on an estimation amount of the change in the use frequency of the operation value due to the change in each of the electric devices, the contribution degree to the change in the performance index of the electric power system due to the change in the use frequency of the operation value, and a value for estimating whether an influence of the change in each of the electric devices on the performance index of the electric power system is positive or negative, the change in the performance index of the electric power system when each of the electric devices is changed.

Accordingly, it is possible to appropriately estimate the influence of the change in each facility in the electric power system on the performance index of the entire electric power system.

(4) In (3) described above, the third information includes a value (for example, change rate D606 of use frequency change estimation of facility change method data 601) indicating a rate of the change in the use frequency for the operation value due to the change in each of the electric devices, and, the processor calculates (for example, estimation shown in FIGS. 8A and 8B) the estimation amount of the change in the use frequency of the operation value of each of the electric devices after being changed by applying the ratio of the change in the use frequency for the operation value included in the third information to the use frequency for the operation value of each of the plurality of electric devices calculated based on the first information.

Accordingly, it is possible to appropriately estimate the change in the use frequency of the operation value due to the change in each electric device, and to appropriately estimate, based on the estimated change, the influence of the change in each facility in the electric power system on the performance index of the entire electric power system.

(5) In (3) described above, the processor calculates the contribution degree to the change in the performance index of the electric power system due to the change in the use frequency of the operation value by calculating an average value of the change in the performance index when the operation value of each of the electric devices is changed based on the first information and the second information (for example, S103).

Accordingly, it is possible to appropriately estimate the influence of the change in the use frequency of the operation value on the performance index of the electric power system, and appropriately estimate, based on the estimated influence, the influence of the change in each facility in the electric power system on the performance index of the entire electric power system.

(6) In (3) described above, the change in each of the electric devices includes at least one of addition of a settable operation value, reduction of the settable operation value, and removal of the electric device, and the processor estimates that the influence of the change in the electric device on the performance index of the electric power system is positive when the change in each of the electric devices is the addition of the settable operation value (for example, addition of settable output voltage of generator, addition of settable input capacity of shut compensator, and addition of tap of transformer), and estimates that the influence of the change in the electric device on the performance index of the electric power system is negative (for example, performance index influence estimation D607 of facility change method data 601) when the change in each of the electric devices is the reduction of the settable operation value or the removal of the electric device (for example, reduction of settable output voltage of generator, reduction of settable input capacity of shut compensator, or removal of tap of transformer).

Accordingly, it is possible to appropriately estimate whether the influence of the change of each electric device on the performance index of the electric power system is positive or negative, and to appropriately estimate, based on the estimated influence, the influence of the change in each facility in the electric power system on the performance index of the entire electric power system.

(7) In (2) described above, the processor generates a plan draft (for example, plan draft data 603) of the change in the electric devices equal to or larger than 1 based on an estimated value of the change in the performance index of the electric power system, and estimates the change in the performance index of the electric power system when the generated plan draft is applied (for example, S204).

Accordingly, it is possible to automatically generate the plan draft for improving the performance index and evaluate in advance the change in the performance index when the plan draft is operated.

(8) In (7) described above, the storage device stores a condition for selecting the electric device as a change target (for example, facility type D803, change type D804, and performance change index condition D805 of plan draft data 603), the condition includes a type of the electric device, a type of the change in the electric device, and a reference of the estimated value of the change in the performance index, and the processor generates the plan draft that includes the electric devices being equal to or larger than 1 and satisfying the condition as change targets and performs the change satisfying the condition.

Accordingly, it is possible to automatically generate a plan draft with a high possibility of improving the performance index.

(9) In (2) described above, the power system planning support system further includes an operation device (for example, a power system operation device 2) configured to repeatedly determine the operation values of the plurality of electric devices so as to improve the performance index, the first information includes the information indicating the performance of the operation values of the plurality of electric devices determined by the operation device, and the second information includes the information indicating the performance index of the electric power system when the operation values of the plurality of electric devices determined by the operation device are set.

Accordingly, in the electric power system operated such that the performance index is improved for a short period of time, it is possible to find the point to be improved of the restriction of the facility or the like for further improving the performance index for a long period of time, and estimate and present the effect.

(10) In (2) described above, the plurality of electric devices include at least one of a generator, a shut compensator, and a transformer, the operation value of each of the electric devices is any one of an output voltage of the generator, an input capacity of the shut compensator, and a tap position of the transformer, and the change in each of the electric devices is any one of a change (for example, addition or reduction of settable voltage) in the settable output voltage of the generator, a change (for example, addition or reduction of settable input capacity) in the settable input capacity of the shut compensator, a change (for example, addition of new tap or removal of present tap) in the settable tap of the transformer, and removal of the electric device.

Accordingly, it is possible to estimate the effects of various changes of various electric devices constituting the electric power system.

The invention is not limited to the above-descried embodiments, and includes various modifications. For example, the embodiments described above are described in detail for better understanding of the invention, and the invention is not necessarily limited to embodiments including all configurations described above. A part of configurations of one embodiment can be replaced with configurations of another embodiment. Alternatively, configurations of an embodiment can be added to configurations of another embodiment. A part of the configuration of each embodiment may be added to, deleted from, or replaced with another configuration.

Configurations, functions, processing units, processing methods and the like described above may be partially or entirely implemented by hardware such as through design using an integrated circuit. The configurations, functions, and the like may also be implemented by software by means of interpreting and executing a program, by a processor, for implementing their respective functions. Information such as a program, a table, or a file for implementing each function can be stored in a storage device such as a nonvolatile semiconductor memory, a hard disk drive, and a solid-state drive (SSD), or a computer readable non-transitory data storage medium such as an IC card, an SD card, and a DVD.

Further, control lines and information lines show those considered to be necessary for description, and not all of the control lines and the information lines are necessarily shown in a product. Actually, it may be considered that almost all the configurations are connected to each other.

## Claims

1. A power system planning support system (1), comprising:
a processor (50); and
a storage device, wherein
the storage device stores
first information (212, 230) indicating a performance of usage statuses of a plurality of electric devices that change an electric power flow of an electric power system in a predetermined period,
second information indicating a performance index of the electric power system in the predetermined period, and
third information (601) indicating a change in the usage status of each of the electric devices estimated when each of the electric devices is changed, and
the processor (50)
estimates, based on the first information (212, 230) and the third information (601), a usage status of each of the electric devices after being changed,
estimates, based on the estimated usage status of each of the electric devices and a contribution degree (D708) to a change in the performance index of the electric power system when each of the electric devices is changed, the change in the performance index of the electric power system when each of the electric devices is changed, and
outputs the estimated change in the performance index, wherein
the first information (212, 230) includes information indicating a performance of an operation value of each of the electric devices as information indicating the performance of the usage statuses of the plurality of electric devices,
the third information (601) includes information indicating a change in a use frequency of the operation value of each of the electric devices as information indicating the change in the usage status due to the change in each of the electric devices, and
the processor (50)
calculates, based on the first information (212, 230), the use frequencies of the operation values of the plurality of electric devices in the predetermined period,
estimates, based on the calculated use frequency and the third information (601), a use frequency of the operation value of each of the electric devices after being changed, and
estimates, based on the estimated use frequency and the contribution degree (D708), the change in the performance index of the electric power system when each of the electric devices is changed.

2. The power system planning support system (1) according to claim 1, wherein
the processor (50) estimates, based on an estimation amount of the change in the use frequency of the operation value due to the change in each of the electric devices, the contribution degree (D708) to the change in the performance index of the electric power system due to the change in the use frequency of the operation value, and a value for estimating whether an influence of the change in each of the electric devices on the performance index of the electric power system is positive or negative, the change in the performance index of the electric power system when each of the electric devices is changed.

3. The power system planning support system (1) according to claim 2, wherein
the third information (601) includes a value indicating a rate of the change in the use frequency for the operation value due to the change in each of the electric devices, and
the processor (50) calculates the estimation amount of the change in the use frequency of the operation value of each of the electric devices after being changed by applying the rate of the change in the use frequency for the operation value included in the third information (601) to the use frequency for the operation value of each of the plurality of electric devices calculated based on the first information (212, 230).

4. The power system planning support system (1) according to claim 2, wherein
the processor (50) calculates the contribution degree (D708) to the change in the performance index of the electric power system due to the change in the use frequency of the operation value by calculating an average value of the change in the performance index when the operation value of each of the electric devices is changed based on the first information (212, 230) and the second information.

5. The power system planning support system (1) according to claim 2, wherein
the change in each of the electric devices includes at least one of addition of a settable operation value, reduction of the settable operation value, and removal of the electric device, and
the processor (50) estimates that the influence of the change in the electric device on the performance index of the electric power system is positive when the change in each of the electric devices is the addition of the settable operation value, and estimates that the influence of the change in the electric device on the performance index of the electric power system is negative when the change in each of the electric devices is the reduction of the settable operation value or the removal of the electric device.

6. The power system planning support system (1) according to claim 1, wherein
the processor (50) generates a plan draft of the change in the electric devices equal to or larger than 1 based on an estimated value of the change in the performance index of the electric power system, and estimates the change in the performance index of the electric power system when the generated plan draft is applied.

7. The power system planning support system (1) according to claim 6, wherein
the storage device stores a condition for selecting the electric device as a change target, the condition including a type of the electric device, a type of the change in the electric device, and a reference of the estimated value of the change in the performance index, and
the processor (50) generates the plan draft that includes the electric devices being equal to or larger than 1 and satisfying the condition as change targets and performs the change satisfying the condition.

8. The power system planning support system (1) according to claim 1, further comprising:
an operation device configured to repeatedly determine the operation values of the plurality of electric devices so as to improve the performance index, wherein
the first information (212, 230) includes the information indicating the performance of the operation values of the plurality of electric devices determined by the operation device, and
the second information includes the information indicating the performance index of the electric power system when the operation values of the plurality of electric devices determined by the operation device are set.

9. The power system planning support system (1) according to claim 1, wherein
the plurality of electric devices include at least one of a generator, a shut compensator, and a transformer,
the operation value of each of the electric devices is any one of an output voltage of the generator, an input capacity of the shut compensator, and a tap position of the transformer, and
the change in each of the electric devices is any one of a change in the settable output voltage of the generator, a change in the settable input capacity of the shut compensator, a change in the settable tap of the transformer, and removal of the electric device.

10. A power system planning support method executed by a power system planning support system (1) including a processor (50) and a storage device,
the storage device storing
first information (212, 230) indicating a performance of usage statuses of a plurality of electric devices that change an electric power flow of an electric power system in a predetermined period,
second information indicating a performance index of the electric power system in the predetermined period, and
third information (601) indicating a change in the usage status of each of the electric devices estimated when each of the electric devices is changed,
the power system planning support method comprising:
a step of estimating, by the processor (50), and based on the first information (212, 230) and the third information (601), a usage status of each of the electric devices after being changed,
a step of estimating, by the processor (50), and based on the estimated usage status of each of the electric devices and a contribution degree (D708) to a change in the performance index of the electric power system when each of the electric devices is changed, the change in the performance index of the electric power system when each of the electric devices is changed, and
a step of outputting, by the processor (50), the estimated change in the performance index, wherein
the first information (212, 230) includes information indicating a performance of an operation value of each of the electric devices as information indicating the performance of the usage statuses of the plurality of electric devices,
the third information (601) includes information indicating a change in a use frequency of the operation value of each of the electric devices as information indicating the change in the usage status due to the change in each of the electric devices, and wherein the power system planning support method is further comprising:
a step of calculating, by the processor (50), based on the first information (212, 230), the use frequencies of the operation values of the plurality of electric devices in the predetermined period,
a step of estimating, by the processor (50), based on the calculated use frequency and the third information (601), a use frequency of the operation value of each of the electric devices after being changed, and
a step of estimating, by the processor (50), based on the estimated use frequency and the contribution degree (D708), the change in the performance index of the electric power system when each of the electric devices is changed.

## Patentansprüche

1. Leistungssystemplanungs-Unterstützungssystem (1), das umfasst:
einen Prozessor (50); und
eine Speichervorrichtung, wobei
die Speichervorrichtung speichert:
erste Informationen (212, 230), die eine Güte von Nutzungsstatus mehrerer elektrischer Vorrichtungen, die einen elektrischen Leistungsfluss eines elektrischen Leistungssystems in einer vorgegebenen Zeitdauer ändern, angeben,
zweite Informationen, die einen Güteindex des elektrischen Leistungssystems in der vorgegebenen Zeitdauer angeben, und
dritte Informationen (601), die eine Änderung des Nutzungsstatus jeder der elektrischen Vorrichtungen, der geschätzt wird, wenn jede der elektrischen Vorrichtungen geändert wird, angeben, und
der Prozessor (50)
auf der Grundlage der ersten Informationen (212, 230) und der dritten Informationen (601) einen Nutzungsstatus jeder der elektrischen Vorrichtungen, nachdem sie geändert worden ist, schätzt,
auf der Grundlage des geschätzten Nutzungsstatus jeder der elektrischen Vorrichtungen und eines Beitragsgrads (D708) zu einer Änderung des Güteindex des elektrischen Leistungssystems, wenn jede der elektrischen Vorrichtungen geändert wird, die Änderung des Güteindex des elektrischen Leistungssystems, wenn jede der elektrischen Vorrichtungen geändert wird, schätzt, und
die geschätzte Änderung des Güteindex ausgibt, wobei
die ersten Informationen (212, 230) Informationen enthalten, die eine Güte eines Betriebswerts jeder der elektrischen Vorrichtungen als Informationen, die die Güte der Nutzungsstatus der mehreren elektrischen Vorrichtungen angeben, angeben,
die dritten Informationen (601) Informationen enthalten, die eine Änderung einer Nutzungshäufigkeit des Betriebswerts jede der elektrischen Vorrichtungen als Informationen, die die Änderung des Nutzungsstatus wegen der Änderung jeder der elektrischen Vorrichtungen angeben, angeben, und
der Prozessor (50)
auf der Grundlage der ersten Informationen (212, 230) die Nutzungshäufigkeiten der Betriebswerte der mehreren elektrischen Vorrichtungen in der vorgegebenen Zeitdauer berechnet,
auf der Grundlage der berechneten Nutzungshäufigkeit und der dritten Informationen (601) eine Nutzungshäufigkeit des Betriebswerts jeder der elektrischen Vorrichtungen, nachdem sie geändert worden ist, schätzt, und
auf der Grundlage der geschätzten Nutzungshäufigkeit und des Beitragsgrads (D708) die Änderung des Güteindex des elektrischen Leistungssystems, wenn jede der elektrischen Vorrichtungen geändert wird, schätzt.

2. Leistungssystemplanungs-Unterstützungssystem (1) nach Anspruch 1, wobei
der Prozessor (50) die Änderung des Güteindex des elektrischen Leistungssystems, wenn jede der elektrischen Vorrichtungen geändert wird, auf der Grundlage eines Schätzbetrags der Änderung der Nutzungshäufigkeit des Betriebswerts wegen der Änderung jeder der elektrischen Vorrichtungen, des Beitragsgrads (D708) zu der Änderung des Güteindex des elektrischen Leistungssystems wegen der Änderung der Nutzungshäufigkeit des Betriebswerts und eines Werts zum Schätzen, ob ein Einfluss der Änderung jeder der elektrischen Vorrichtungen auf den Güteindex des elektrischen Leistungssystems positiv oder negativ ist, schätzt.

3. Leistungssystemplanungs-Unterstützungssystem (1) nach Anspruch 2, wobei
die dritten Informationen (601) einen Wert enthalten, der eine Änderungsrate der Nutzungshäufigkeit für den Betriebswert wegen der Änderung jeder der elektrischen Vorrichtungen angibt, und
der Prozessor (50) den Schätzbetrag der Änderung der Nutzungshäufigkeit des Betriebswerts jeder der elektrischen Vorrichtungen, nachdem sie geändert worden ist, durch Anwenden der in den dritten Informationen (601) enthaltenen Änderungsrate der Nutzungshäufigkeit für den Betriebswert auf die auf der Grundlage der ersten Informationen (212, 230) berechnete Nutzungshäufigkeit für den Betriebswert jeder der mehreren elektrischen Vorrichtungen berechnet.

4. Leistungssystemplanungs-Unterstützungssystem (1) nach Anspruch 2, wobei
der Prozessor (50) den Beitragsgrad (D708) zu der Änderung des Güteindex des elektrischen Leistungssystems wegen der Änderung der Nutzungshäufigkeit des Betriebswerts durch Berechnen eines Mittelwerts der Änderung des Güteindex, wenn der Betriebswert jeder der elektrischen Vorrichtungen geändert wird, auf der Grundlage der ersten Informationen (212, 230) und der zweiten Informationen berechnet.

5. Leistungssystemplanungs-Unterstützungssystem (1) nach Anspruch 2, wobei
die Änderung jeder der elektrischen Vorrichtungen wenigstens eines der Zugabe eines einstellbaren Betriebswerts, der Verringerung des einstellbaren Betriebswerts und der Entnahme der elektrischen Vorrichtung enthält, und
der Prozessor (50) schätzt, dass der Einfluss der Änderung der elektrischen Vorrichtung auf den Güteindex des elektrischen Leistungssystems positiv ist, wenn die Änderung jeder der elektrischen Vorrichtungen die Zugabe des einstellbaren Betriebswerts ist, und schätzt, dass der Einfluss der Änderung der elektrischen Vorrichtung auf den Güteindex des elektrischen Leistungssystems negativ ist, wenn die Änderung jeder der elektrischen Vorrichtungen eine Verringerung des einstellbaren Betriebswerts oder die Entnahme der elektrischen Vorrichtung ist.

6. Leistungssystemplanungs-Unterstützungssystem (1) nach Anspruch 1, wobei
der Prozessor (50) einen Planentwurf der Änderung der elektrischen Vorrichtungen gleich oder größer als 1 auf der Grundlage eines Schätzwertes der Änderung des Güteindex des elektrischen Leistungssystems erzeugt und die Änderung des Güteindex des elektrischen Leistungssystems, wenn der erzeugte Planentwurf angewendet wird, schätzt.

7. Leistungssystemplanungs-Unterstützungssystem (1) nach Anspruch 6, wobei
die Speichervorrichtung einen Zustand zum Auswählen der elektrischen Vorrichtung als ein Änderungsziel speichert, wobei der Zustand einen Typ der elektrischen Vorrichtung, einen Typ der Änderung der elektrischen Vorrichtung und einen Bezugswert des Schätzwertes der Änderung des Güteindex enthält, und
der Prozessor (50) den Planentwurf erzeugt, der die elektrischen Vorrichtungen, die größer oder gleich 1 sind und die Bedingung als Änderungsziele erfüllen, enthält und die Änderung, die die Bedingung erfüllt, ausführt.

8. Leistungssystemplanungs-Unterstützungssystem (1) nach Anspruch 1, das ferner umfasst:
eine Betriebsvorrichtung, die konfiguriert ist, die Betriebswerte der mehreren elektrischen Vorrichtungen wiederholt zu bestimmen, um den Güteindex zu verbessern, wobei
die ersten Informationen (212, 230) die Informationen enthalten, die die Güte der Betriebswerte der mehreren elektrischen Vorrichtungen, die durch die Betriebsvorrichtung bestimmt wird, angeben, und
die zweiten Informationen die Informationen enthalten, die den Güteindex des elektrischen Leistungssystems, wenn die durch die Betriebsvorrichtung bestimmten Betriebswerte der mehreren elektrischen Vorrichtungen eingestellt werden, angeben.

9. Leistungssystemplanungs-Unterstützungssystem (1) nach Anspruch 1, wobei
die mehreren elektrischen Vorrichtungen wenigstens eine eines Generators, eines Nebenschlusskompensators und eines Transformators enthalten,
der Betriebswert jeder der elektrischen Vorrichtungen irgendeiner einer Ausgangsspannung des Generators, einer Eingangskapazität des Nebenschlusskompensators und einer Abgriffstelle des Transformators ist, und
die Änderung jeder der elektrischen Vorrichtungen irgendeine einer Änderung der einstellbaren Ausgangsspannung des Generators, einer Änderung der einstellbaren Eingangskapazität des Nebenschlusskompensators, einer Änderung des einstellbaren Abgriffs des Transformators und einer Entnahme der elektrischen Vorrichtung ist.

10. Leistungssystemplanungs-Unterstützungsverfahren, das durch ein Leistungssystemplanungs-Unterstützungssystem (1), das einen Prozessor (50) und eine Speichervorrichtung enthält, ausgeführt wird,
wobei die Speichervorrichtung speichert:
erste Informationen (212, 230), die eine Güte von Nutzungsstatus mehrerer elektrischer Vorrichtungen, die einen elektrischen Leistungsfluss eines elektrischen Leistungssystems in einer vorgegebenen Zeitdauer ändern, angeben,
zweite Informationen, die einen Güteindex des elektrischen Leistungssystems in der vorgegebenen Zeitdauer angeben, und
dritte Informationen (601), die eine Änderung des Nutzungsstatus jeder der elektrischen Vorrichtungen, der geschätzt wird, wenn jede der elektrischen Vorrichtungen geändert wird, angeben,
wobei das Leistungssystemplanungs-Unterstützungsverfahren umfasst:
einen Schitt des Schätzens eines Nutzungsstatus jeder der elektrischen Vorrichtungen, nachdem sie geändert worden ist, durch den Prozessor (50) und auf der Grundlage der ersten Informationen (212, 230) und der dritten Informationen (601),
einen Schitt des Schätzens der Änderung des Güteindex des elektrischen Leistungssystems, wenn jede der elektrischen Vorrichtungen geändert wird, durch den Prozessor (50) und auf der Grundlage des geschätzten Nutzungsstatus jeder der elektrischen Vorrichtungen und eines Beitragsgrads (D708) zu einer Änderung des Güteindex des elektrischen Leistungssystems, wenn jede der elektrischen Vorrichtungen geändert wird, und
einen Schitt des Ausgebens der geschätzten Änderung des Güteindex durch den Prozessor (50), wobei
die ersten Informationen (212, 230) Informationen enthalten, die eine Güte eines Betriebswerts jeder der elektrischen Vorrichtungen als Informationen, die die Güte der Nutzungsstatus der mehreren elektrischen Vorrichtungen angeben, angeben,
die dritten Informationen (601) Informationen enthalten, die eine Änderung einer Nutzungshäufigkeit des Betriebswerts jede der elektrischen Vorrichtungen als Informationen, die die Änderung des Nutzungsstatus wegen der Änderung jeder der elektrischen Vorrichtungen angeben, angeben, und wobei das Leistungssystemplanungs-Unterstützungsverfahren ferner umfasst:
einen Schritt des Berechnens der Nutzungshäufigkeiten der Betriebswerte der mehreren elektrischen Vorrichtungen in der vorgegebenen Zeitdauer durch den Prozessor (50) auf der Grundlage der ersten Informationen (212, 230),
einen Schitt des Schätzens einer Nutzungshäufigkeit des Betriebswerts jeder der elektrischen Vorrichtungen, nachdem sie geändert worden ist, durch den Prozessor (50) auf der Grundlage der berechneten Nutzungshäufigkeit und der dritten Informationen (601), und
einen Schitt des Schätzens der Änderung des Güteindex des elektrischen Leistungssystems, wenn jede der elektrischen Vorrichtungen geändert wird, durch den Prozessor (50) auf der Grundlage der geschätzten Nutzungshäufigkeit und des Beitragsgrads (D708).

## Revendications

1. Système d'aide à la planification d'un système de puissance (1), comprenant :
un processeur (50) ; et
un dispositif de stockage, dans lequel
le dispositif de stockage stocke
des premières informations (212, 230) indiquant une performance d'états d'utilisation d'une pluralité de dispositifs électriques qui changent un flux de puissance électrique d'un système de puissance électrique dans une période prédéterminée,
des deuxièmes informations indiquant un indice de performance du système de puissance électrique dans la période prédéterminée, et
des troisièmes informations (601) indiquant un changement dans l'état d'utilisation de chacun des dispositifs électriques estimé quand chacun des dispositifs électriques est changé, et
le processeur (50)
estime, sur la base des premières informations (212, 230) et des troisièmes informations (601), un état d'utilisation de chacun des dispositifs électriques après changement,
estime, sur la base de l'état d'utilisation estimé de chacun des dispositifs électriques et d'un degré de contribution (D708) à un changement dans l'indice de performance du système de puissance électrique quand chacun des dispositifs électriques est changé, le changement dans l'indice de performance du système de puissance électrique quand chacun des dispositifs électriques est changé, et
sort le changement estimé dans l'indice de performance, dans lequel
les premières informations (212, 230) incluent des informations indiquant une performance d'une valeur d'exploitation de chacun des dispositifs électriques à titre d'informations indiquant la performance des états d'utilisation de la pluralité de dispositifs électriques,
les troisièmes informations (601) incluent des informations indiquant un changement dans une fréquence d'utilisation de la valeur d'exploitation de chacun des dispositifs électriques à titre d'informations indiquant le changement dans l'état d'utilisation en raison du changement dans chacun des dispositifs électriques, et
le processeur (50)
calcule, sur la base des premières informations (212, 230), les fréquences d'utilisation des valeurs d'exploitation de la pluralité de dispositifs électriques dans la période prédéterminée,
estime, sur la base de la fréquence d'utilisation calculée et des troisièmes informations (601), une fréquence d'utilisation de la valeur d'exploitation de chacun des dispositifs électriques après changement, et
estime, sur la base de la fréquence d'utilisation estimée et du degré de contribution (D708), le changement dans l'indice de performance du système de puissance électrique quand chacun des dispositifs électriques est changé.

2. Système d'aide à la planification d'un système de puissance (1) selon la revendication 1, dans lequel
le processeur (50) estime, sur la base d'une quantité d'estimation du changement dans la fréquence d'utilisation de la valeur d'exploitation en raison du changement dans chacun des dispositifs électriques, le degré de contribution (D708) au changement dans l'indice de performance du système de puissance électrique en raison du changement dans la fréquence d'utilisation de la valeur d'exploitation, et d'une valeur destinée à estimer si une influence du changement dans chacun des dispositifs électriques sur l'indice de performance du système de puissance électrique est positive ou négative, le changement dans l'indice de performance du système de puissance électrique quand chacun des dispositifs électriques est changé.

3. Dispositif d'aide à la planification d'un système de puissance (1) selon la revendication 2, dans lequel
les troisièmes informations (601) incluent une valeur indiquant un taux du changement dans la fréquence d'utilisation pour la valeur d'exploitation en raison du changement dans chacun des dispositifs électriques, et
le processeur (50) calcule la quantité d'estimation du changement dans la fréquence d'utilisation de la valeur d'exploitation de chacun des dispositifs électriques après changement en appliquant le taux du changement dans la fréquence d'utilisation pour la valeur d'exploitation incluse dans les troisièmes informations (601) à la fréquence d'utilisation pour la valeur d'exploitation de chacun de la pluralité de dispositifs électriques calculés sur la base des premières informations (212, 230).

4. Système d'aide à la planification d'un système de puissance (1) selon la revendication 2, dans lequel
le processeur (50) calcule le degré de contribution (D708) au changement dans l'indice de performance du système de puissance électrique en raison du changement dans la fréquence d'utilisation de la valeur d'exploitation en calculant une valeur moyenne du changement dans l'indice de performance quand la valeur d'exploitation de chacun des dispositifs électriques est changée sur la base des premières informations (212, 230) et des deuxièmes informations.

5. Système d'aide à la planification d'un système de puissance (1) selon la revendication 2, dans lequel
le changement dans chacun des dispositifs électriques inclut au moins un élément parmi une addition d'une valeur d'exploitation définissable, une réduction de la valeur d'exploitation définissable, et un retrait du dispositif électrique, et
le processeur (50) estime que l'influence du changement dans le dispositif électrique sur l'indice de performance du système de puissance électrique est positive quand le changement dans chacun des dispositifs électriques est l'addition de la valeur d'exploitation définissable, et estime que l'influence du changement dans le dispositif électrique sur l'indice de performance du système de puissance électrique est négative quand le changement dans chacun des dispositifs électriques est la réduction de la valeur d'exploitation définissable ou le retrait du dispositif électrique.

6. Système d'aide à la planification d'un système de puissance (1) selon la revendication 1, dans lequel
le processeur (50) génère un projet de plan du changement dans les dispositifs électriques égaux ou supérieurs à 1 sur la base d'une valeur estimée du changement dans l'indice de performance du système de puissance électrique, et estime le changement dans l'indice de performance du système de puissance électrique quand le projet de plan généré est appliqué.

7. Système d'assistance à la planification d'un système de puissance (1) selon la revendication 6, dans lequel
le dispositif de stockage stocke une condition destinée à sélectionner le dispositif électrique en tant que cible de changement, la condition incluant un type du dispositif électrique, un type du changement dans le dispositif électrique, et une référence de la valeur estimée du changement dans l'indice de performance, et
le processeur (50) génère le projet de plan qui inclut les dispositifs électriques qui sont égaux ou supérieurs à 1 et qui satisfont à la condition en tant que cibles de changement, et effectue le changement satisfaisant à la condition.

8. Système d'aide à la planification d'un système de puissance (1) selon la revendication 1, comprenant en outre :
un dispositif d'exploitation configuré pour déterminer de manière répétée les valeurs d'exploitation de la pluralité de dispositifs électriques de manière à améliorer l'indice de performance, dans lequel
les premières informations (212, 230) incluent les informations indiquant la performance des valeurs d'exploitation de la pluralité de dispositifs électriques déterminés par le dispositif d'exploitation, et
les deuxièmes informations incluent des informations indiquant l'indice de performance du système de puissance électrique quand les valeurs d'exploitation de la pluralité de dispositifs électriques déterminés par le dispositif d'exploitation sont définies.

9. Système d'aide à la planification d'un système de puissance (1) selon la revendication 1, dans lequel
la pluralité de dispositifs électriques incluent l'un au moins d'un générateur, d'un compensateur shunt, et d'un transformateur,
la valeur d'exploitation de chacun des dispositifs électriques est l'une quelconque d'une tension de sortie du générateur, d'une capacité d'entrée du compensateur shunt, et d'une position de prise du transformateur, et
le changement dans chacun des dispositifs électriques est l'un quelconque d'un changement dans la tension de sortie définissable du générateur, d'un changement dans la capacité d'entrée définissable du compensateur shunt, d'un changement dans la prise définissable du transformateur, et d'un retrait du dispositif électrique.

10. Procédé d'aide à la planification d'un système de puissance exécuté par un système d'aide à la planification d'un système de puissance (1) incluant un processeur (50) et un dispositif de stockage,
le dispositif de stockage stockant
des premières informations (212, 230) indiquant une performance d'états d'utilisation d'une pluralité de dispositifs électriques qui changent un flux de puissance électrique d'un système de puissance électrique dans une période prédéterminée,
des deuxièmes informations indiquant un indice de performance du système de puissance électrique dans la période prédéterminée, et
des troisièmes informations (601) indiquant un changement dans l'état d'utilisation de chacun des dispositifs électriques estimé quand chacun des dispositifs électriques est changé, et
le procédé d'aide à la planification d'un système de puissance comprenant :
une étape consistant à estimer, via le processeur (50), et sur la base des premières informations (212, 230) et des troisièmes informations (601), un état d'utilisation de chacun des dispositifs électriques après changement,
une étape consistant à estimer, via le processeur (50), et sur la base de l'état d'utilisation estimé de chacun des dispositifs électriques et d'un degré de contribution (D708) à un changement dans l'indice de performance du système de puissance électrique quand chacun des dispositifs électriques est changé, le changement dans l'indice de performance du système de puissance électrique quand chacun des dispositifs électriques est changé, et une étape consistant à sortir, via le processeur (50), le changement estimé dans l'indice de performance, dans lequel
les premières informations (212, 230) incluent des informations indiquant une performance d'une valeur d'exploitation de chacun des dispositifs électriques à titre d'informations indiquant la performance des états d'utilisation de la pluralité de dispositifs électriques,
les troisièmes informations (601) incluent des informations indiquant un changement dans une fréquence d'utilisation de la valeur d'exploitation de chacun des dispositifs électriques à titre d'informations indiquant le changement dans l'état d'utilisation en raison du changement dans chacun des dispositifs électriques, et dans lequel le procédé d'aide à la planification d'un système de puissance comprend en outre :
une étape consistant à calculer, via le processeur (50), sur la base des premières informations (212, 230), les fréquences d'utilisation des valeurs d'exploitation de la pluralité de dispositifs électriques dans la période prédéterminée,
une étape consistant à estimer, via le processeur (50), sur la base de la fréquence d'utilisation calculée et des troisièmes informations (601), une fréquence d'utilisation de la valeur d'exploitation de chacun des dispositifs électriques après changement, et
une étape consistant à estimer, via le processeur (50), sur la base de la fréquence d'utilisation estimée et du degré de contribution (D708), le changement dans l'indice de performance du système de puissance électrique quand chacun des dispositifs électriques est changé.
